Europäisches Patentamt

European Patent Office

Office européen des brevets

(19)

(11) Publication number: **0 142 313**
**B1**

(12)     EUROPEAN PATENT SPECIFICATION

(45) Date of publication of patent specification: **14.12.88**

(51) Int. Cl.⁴: **B 01 J 29/06**, B 01 J 29/28 //
C10G11/05

(21) Application number: **84307550.8**

(22) Date of filing: **01.11.84**

(54) Method of preparing a zeolite catalyst with enhanced catalytic activity.

(30) Priority: **03.11.83 US 548590**

(43) Date of publication of application:
**22.05.85 Bulletin 85/21**

(45) Publication of the grant of the patent:
**14.12.88 Bulletin 88/50**

(84) Designated Contracting States:
**BE DE FR GB IT NL SE**

(56) References cited:
**EP-A-0 062 123**
**EP-A-0 095 304**
**EP-A-0 095 846**
**FR-A-2 084 704**
**US-A-3 442 795**

(73) Proprietor: **MOBIL OIL CORPORATION**
**150 East 42nd Street**
**New York New York 10017 (US)**

(72) Inventor: **Kuehl, Guenter Hinrich**
**1956 Cardinal Lake Drive**
**Cherry Hill New Jersey 08003 (US)**
Inventor: **Rosinski, Edward Joseph**
**Box A**
**Pedricktown New Jersey 08067 (US)**

(74) Representative: **Cooper, John Anthony et al**
**CARPMAELS & RANSFORD 43 Bloomsbury Square**
**London WC1A 2RA (GB)**

Courier Press, Leamington Spa, England.

# EP 0 142 313 B1

**Description**

This invention relates to a zeolite with enhanced acid catalytic activity suitable for use in catalytic processes catalyzed by acid catalysts, the method of preparation of the zeolite, and organic compound conversion, e.g., catalytic cracking, processes using a catalyst comprising the activity-enhanced zeolite.

Hydrocarbon conversion processes utilizing crystalline zeolites have been the subject of extensive investigation during recent years, as is obvious from both the patent and scientific literature. Crystalline zeolites have been found to be particularly effective for a wide variety of hydrocarbon conversion processes including the catalytic cracking of a gas oil to produce motor fuels and have been described and claimed in many patents, including U.S. Patents 3,140,249; 3,140,251; 3,140,252; 3,140,253; and 3,271,418. It is also known in the prior art to incorporate the crystalline zeolite into a matrix for catalytic cracking and such disclosure appears in one or more of the above-identified U.S. Patents.

It is also known that improved results will be obtained with regard to the catalytic cracking of gas oils if a crystalline zeolite having a pore size of less than 7 Angstrom units is included with a crystalline zeolite having a pore size greater than 8 Angstrom units, either with or without a matrix. A disclosure of this type is found in U.S. Patent 3,769,202.

Improved results in catalytic cracking with respect to both octane number and overall yield are reported in U.S. Patent 3,758,403. In this patent, the cracking catalyst is comprised of a large pore size crystalline zeolite (pore size greater than 7 Angstrom units) in admixture with ZSM-5 zeolite wherein the ratio of ZSM-5 type zeolite to large pore size crystalline zeolite is in the range of 1:10 to 3:1.

The use of ZSM-5 zeolite in conjunction with a zeolite cracking catalyst of the X or Y faujasite variety is described in U.S. Patent 3,894,931; 3,894,933; and 3,894,934. The two former patents disclose the use of ZSM-5 zeolite in amounts up to and about 5 to 10 weight percent; the latter patent discloses the weight ratio of ZSM-5 zeolite to large pore size crystalline zeolite in the range of 1:10 to 3:1.

The addition of very small amounts of pure, finely divided shape selective catalyst to a conventional FCC catalyst, is taught in U.S. Patent 4,309,280. This patent teaches the advantage of using, as the powdered additive catalyst, a ZSM-5 zeolite with very high silica-alumina ratios. Use of a 1500 to 1 $SiO_2/Al_2O_3$ mole ratio ZSM-5 catalyst in conjunction with a fluid cracking process is disclosed in Example 8 and Example 13. Use of a ZSM-5 material with an even higher ratio is disclosed n Example 9, which adds a ZSM-5 material containing only 15 ppm $Al_2O_3$. The patentees comment that the preferred additives, shape selective zeolites such as ZSM-5, are very active even with high silica to alumina mole ratios. This activity is considered surprising, since catalytic activity of zeolites has generally been attributed to cations associated with framework aluminum atoms.

U.S. Patent 4,309,279 discloses the addition of very small amounts of a special class of zeolites characterized by a silica to alumina mole ratio greater than 12 and a constraint index of about 1 to 12, to conventional cracking catalyst. The patentees included a teaching, but no examples, to addition of shape selective zeolites, e.g., ZSM-5, with very high silica to alumina mole ratios, up to 30,000 and greater.

In U.S. Patent 4,340,465 the patentees teach use of ZSM-5 catalyst with very high silica to alumina mole ratios for catalytic cracking. The examples in this patent show that as the silica to alumina mole ratio is increased, the activity of the catalyst, as measured by the weight percent conversion, is decreased. In going from a sieve containing 2.3 weight percent Al, to 0.45 to 0.04 wt.%, the weight percent conversion declines from 34 to 12 to 7, respectively. This indicates a significant loss in cracking activity when using ZSM-5 with a relatively low aluminum content.

Some work has been done on removal of aluminum from relatively large pore zeolites such as mordenite. In U.K. Patent Specification 1,151,653, the patentees disclose that the hydrogen form of a zeolite was preferred for many hydrocarbon conversion processes, and teach a combination treatment of the zeolite with acid and an ammonium compound to achieve the desired hydrogen form. The treatment includes boiling with acid, which woud extract some aluminum. In addition, U.K. patent specification 1,261,616 teaches a method of making acid extracted mordenite.

Some work has also been reported on preparation of aluminum deficient faujasites in "Chemistry of Crystalline Aluminosilicates", G. T. Kerr, the *Journal of Physical Chemistry*, Vol. 72, 1968, pages 2594—2596 and in U.S. Patent 3,442,795. In this article, it is noted that aluminum is removed directly from sodium zeolite Y, using ethylenediaminetetraacetic acid, EDTA. This reference teaches that as most of the Al is removed from the NaY, the crystallinity of the material changes, and indeed is lost when less than 20 percent of the original aluminum framework content remains. This reference reported increased sorptive capacity, based on the number of grams of $SiO_2$ in the samples, up to about 70 percent aluminum removal, after which sorptive capacity decreased.

Many of the forgoing prior art reference teachings would lead the skilled artisan to conclude that the catalytic acid activity of aluminosilicate zeolites is directly related to the aluminum content of the zeolite. It has been surprisingly discovered, however, that under certain conditions the acid activity of some aluminosilicate zeolites can be enhanced by treating the zeolite with aluminum extracting agents which actually cause some aluminum to be removed from the zeolite and in particular from the zeolite framework structure.

Accordingly, the present invention provides a process for treating an aluminosilicate zeolite in order to enhance its catalytic acid activity. Such a process comprises contacting a zeolite other than zeolite beta having a silica to alumina ratio of at least about 12 and a constraint index of 1 to 12 with an aluminum extracting reagent under particular conditions. Such conditions include a temperature of from 50° to 300°C, a pressure sufficient to maintain the aluminum extracting reagent in the liquid phase and a reaction time and overall reaction conditions sufficient to increase the acid activity of the zeolite. The present invention also relates to the use of such treated zeolite materials as catalysts for conversion of organic, e.g., hydrocarbon, compounds and to catalyst composites containing such activity-enhanced zeolites.

The aluminosilicate zeolites which are useful in the present invention are those which, prior to treatment, have a silica to alumina molar ratio of at least about 12, preferably at least about 35, and more preferably at least about 70.

ZSM-5 type zeolites, i.e., zeolites of silica/alumina molar ratio greater than about 12 and of a Constraint Index of 1 to 12 are well known. Zeolites of this type have previously been employed in catalyst treatment methods for enhancing catalyst activity such as the method described in U.S. Patent 4,326,994. Crystalline zeolites of the type preferred for use in the zeolite treatment processes of the present invention include ZSM-5, ZSM-11, ZSM-12, ZSM-23, ZSM-35, ZSM-38, and ZSM-48, preferably ZSM-5, ZSM-12 and ZSM-23, with ZSM-5 and ZSM-12 being particularly preferred.

ZSM-5 is described in greater detail in U.S. Patents Nos. 3,702,886 and Re 29,948 which patents provide the X-ray diffraction pattern of therein disclosed ZSM-5.

ZSM-11 is described in U.S. Patent No. 3,709,979 which discloses in particular the X-ray diffraction pattern of said ZSM-11.

ZSM-12 is described in U.S. Patent No. 3,832,449 which discloses in particular the X-ray diffraction pattern of ZSM-12.

ZSM-23 is described in U.S. Patent No. 4,076,842 which discloses in particular the X-ray diffraction pattern of ZSM-23.

ZSM-35 is described in U.S. Patent No. 4,016,245 which discloses in particular the X-ray diffraction pattern of ZSM-35.

ZSM-38 is described in U.S. Patent No. 4,046,859 which discloses in particular the X-ray diffraction pattern of ZSM-38.

ZSM-48 is described in U.S. Patent No. 4,375,573 and European Patent Publication EP-A-0015132, which discloses in particular the X-ray diffraction pattern of ZSM-48.

The specific zeolites described, when prepared in the presence of organic cations, are substantially catalytically inactive, possibly because the intra-crystalline free space is occupied by organic cations from the forming solution. They may be activated by heating in an inert atmosphere at 540°C for one hour, for example, followed by base exchange with ammonium salts followed by calcination at 540°C in air. The presence of organic cations in the forming solution may not be absolutely essential to the formation of this type zeolite; however, the presence of these cations does appear to favor the formation of this special class of zeolite. More generally, it is desirable to activate this type catalyst by base exchange with ammonium salts followed by calcination in air at about 540°C for from about 15 minutes to about 24 hours.

Thus when synthesized in the alkali metal form, the zeolite is conveniently converted to the hydrogen form, generally by intermediate formation of the ammonium form as a result of ammonium ion exchange and calcination of the ammonium form as a result of ammonium ion exchange and calcination of the ammonium form to yield the hydrogen form. As discussed in greater detail hereinafter, it is preferred to utilize zeolites in either the hydrogen or ammonium form is the activity-enhancing zeolite treatment process of this invention.

In accordance with the present invention, aluminosilicate zeolites, and preferably the ZSM-5 type zeolitss, are contacted under particular conditions with an aluminum extracting reagent. It is preferred to extract aluminum from the zeolite using a strong mineral acid, a chelating agent or other complexing agent or some combination of these reagents.

The starting zeolite material is usually in the hydrogen form for best removal of aluminum from the zeolite framework. The hydrogen form may be generated in-situ, e.g., if an acid is used for the aluminum extraction, the H-form is made in-situ. Another way would be to ion-exchange with $NH_4^+$, to thereafter calcine in the presence of water vapor or steam, causing removal of some Al from the framework, and finally to then ion-exchange this now cationic Al with a salt, e.g., an $NH_4^+$ salt. The latter ion-exchange can be facilitated by using a chelating agent, e.g., $(NH_4)_2 H_2EDTA$, for the $NH_4^+$ exchange. The EDTA removes the $Al^{3+}$ ions from the ion-exchange equilibrium by complexing. $(NH_4)_2 H_2 EDTA$ does not remove framework-Al, while $H_4 EDTA$ does.

When a strong acid is used to extract aluminum, any mineral acid such as phosphoric, hydrochloric, nitric, sulfuric or HF may be used, as well as mixtures thereof. Use of relatively concentrated sulfuric or hydrochloric acids, e.g., 1 to 10 normal, gives good acid extraction by simply heating the zeolite in the acid solution. Temperatures of 50 to 300°C may be used, with pressures sufficient to maintain a liquid phase. Preferably temperatures of 90 to 250°C are used, with temperatures of 100 to 160°C most preferred.

It is more difficult to remove aluminum from the zeolites of the ZSM-5 type than from larger pore zeolites, e.g., Y and mordenite. Somewhat more severe extracting conditions are needed. The best extracting agent cannot remove Al from the zeolite, if the pores are too small for the hydrated $Al^{3+}$ to pass through.

When aluminum sites are referred to, tetrahedral or framework sites are usually meant. These sites are not associated with water of hydration. However, when this Al is hydrolyzed out of the framework, then the small $Al^{3+}$ cations of high charge density are surrounded by water of hydration.

It may be possible to use weaker acids, e.g., six normal acetic acid, or very dilute solutions of strong mineral acids, e.g., 0.1 N $H_2SO_4$, but when such an approach is taken, higher temperatures or longer acid extraction times will be necessary.

The other general approach to aluminum removal is use of a chelating agent such as ethylenediaminetetraacetic acid, EDTA, nitrilo triacetic acid, NTA, or other chelating agents. The chelating agent, e.g., EDTA, does not go into the zeolite pores. It only removes the $Al^{3+}$ migrating out of the pores from the ion-exchange equilibrium by complexing. Thus, the chelating agent does not actually remove the Al from the framework. This latter reaction is caused by the reaction of the $H^+$ form zeolite with water (hydrolyisis).

The minimum amount of chelating agent that must be added is that required by stoichiometry to remove the desired amount of aluminum from the zeolite, e.g., from the zeolite framework. The upper limit on amount of chelating agent that is added is set more by economics than anything else. It is possible to operate with a large excess of chelating agent and shorten the amount of time, or temperature, required for aluminum extraction.

The preferred chelating agent is EDTA. It is preferred to operate with 1 to 10 times the EDTA required by stoichiometry. The process can be conducted simply in a container with water, at temperatures of 50°C to 250°C, with pressure sufficient to maintain a liquid phase reaction medium.

It is also possible to combine both aluminum extraction techniques when desired. In one embodiment the zeolite will be subjected to aluminum extraction with a strong mineral acid, followed by aluminum extraction using a chelating agent. In another embodiment, extraction of aluminum will first be conducted using a chelating agent, followed by strong acid extraction. In yet another embodiment, some chelating agent may be added to the acid solution used to extract aluminum, or some strong mineral acid may be added to the solution containing chelating agent.

At least some aluminum removal from the zeolite is necessary. Significant improvement in activity occurs in some zeolites with a constraint index of 1 to 12, and a silica to alumina ratio greater than 12 when only 5% of the zeolite aluminum is removed. Preferably 10 to 90% of the aluminum is removed from the zeolites treated herein. More usually removal of from 15% to 50% of the aluminum from the zeolite will be effected.

Preferably, there is limited removal of at least some of the zeolite framework aluminum by an acid treatment process. Such acid treatment with its associated removal of aluminum leads to enhanced catalytic activity.

Treatment of the zeolite with the aluminum extracting agent is carried out to the extent necessary to effect an increase in the acid activity of the zeolite so treated. The degree of zeolite catalyst activity for all acid catalyzed reactions can be measured and compared by means of "alpha value" ($\alpha$). The alpha value reflects the relative activity of the catalyst with respect to a high activity silica-aluminum cracking catalyst. To determine the alpha value as such term is used herein, n-hexane conversion is determined at a suitable temperature between about 550°F—1000°F (288°C—538°C), preferably at 1000°F (538°C). Conversion is varied by variation in space velocity such that a conversion level of up to about 60% of per unit volume of zeolite and compared with that of silica-alumina catalyst which is normalized to a reference activity of 1000°F (538°C). Catalyst activity of a catalyst is expressed as a multiple of this standard, i.e., the silica-alumina standard. The silica-alumina reference catalyst contains about 10 percent $Al_2O_3$ and the remainder $SiO_2$. This method of determining alpha is in general more fully described in the *Journal of Catalysis*, Vol. VI, pages 278—287, 1966.

In using the treated zeolites of the present invention as catalysts, it may be desirable to incorporate the above-described activity-enhanced crystalline zeolites in another material resistant to the temperature and other conditions employed in organic compound conversion processes. Such matrix materials include synthetic and naturally occurring substances, as well as inorganic materials such as clay, silica and/or metal oxides. The latter may be fither naturally occuring or in the form of gelatinous precipitates or gels including mixtures of silica and metal oxides. Naturally occurring clays which can be composited with the zeolite include those of the montmorillonite and kaolin families, which families include the sub-bentonites and the kaolins commonly known as Dixie, McNamee-Georgia and Florida clays or others in which the main mineral constituent is halloysite, kaolinite, dickite, nacrite or anauxite. Such clays can be used in the raw state as originally mined or initially subjected to calcination, acid treatment or chemical modifications.

In addition to the foregoing materials, the zeolites employed herein may be composited with a porous matrix material, such as alumina, silica-alumina, silica-magnesia, silica-zirconia, silica-thoria, silica-beryllia, and silica-titania, as well as ternary compositions, such as silica-alumina-thoria, silica-alumina-zirconia, silica-alumina-magnesia and silica-magnesia-zirconia. The matrix may be in the form of a cogel. The relative proportions of zeolite component and inorganic oxide gel matrix, on an anhydrous basis, may vary widely with the zeolite content ranging from between about 1 to about 90 percent by weight and more usually in the range of about 5 to about 80 percent by weight of the dry composite. The matrix component in such catalyst composites thus ranges from about 10% to 99% by weight, more preferably from about 20% to 95% by weight of the composite.

The treated zeolites of the present invention may be used in any organic compound, e.g., hydrocarbon compound, conversion processes, though not all zeolites of this invention will be equally useful in all processes.

Employing a catalytically active form of the composition of this invention containing a hydrogenation component, heavy petrolum residual stocks, cycle stocks, and other hydrocrackable charge stocks can be hydrocracked at temperatures between about 200 to 450°C using molar ratios of hydrogen to hydrocarbon charge in the range between 2 and 80. The pressure employed will vary between 1 to 200 atmospheres absolute (atm. abs.), and the liquid hourly space velocity between 0.1 and 10.

A catalytically active form of the composition of this invention can be employed for catalytic cracking, hydrocarbon cracking stocks can be cracked at a liquid hourly space velocity between about 0.5 and 50, a temperature between about 275°C to 600°C, a pressure between about subatmospheric and several hundred atmospheres.

Employing a catalytically active form of a member of the family of zeolites of this invention containing a hydrogenation component, reforming stocks can be reformed employing a temperature between about 350°C to 55°C. The pressure can be between about 5 to 100 atm., abs., but is preferably between 15 to 50 atm., abs. The liquid hourly space velocity is generally between 0.1 and 10, preferably between 0.4 and 4 and the hydrogen to hydrocarbon mole ratio is generally between 1 and 20 preferably between 4 and 12.

A catalytically active form of the composition of this invention can also be used for hydroisomerization of normal paraffins, when provided with a hydrogenation component, e.g., platinum. Hydroisomerization is carried out at a temperature between about 0 to 400°C, preferably about 150°C to 300°C, with a liquid hourly space velocity between 0.01 and 2, preferably between 0.25 and 0.50 employing hydrogen such that the hydrogen to hydrocarbon mole ratio is between 1:1 and 5:1. Additionally, the catalyst can be used for olefin isomerization employing temperatures between about 0 to 400°C.

Other reactions which can be accomplished employing a catalytically active form of the composition of this invention with or without a metal, e.g., platinum, include hydrogenation-dehydrogenation reactions and desulfurization reactions, olefin polymerization (oligomerization), aromatics alkylation, aromatics isomerization, disproportionation, transalkylation, and other organic compound conversion such as the conversion of alcohols (e.g., methanol to hydrocarbon).

As mentioned hereinbefore, the zeolites produced in the accordance with the present invention are especially useful in cracking. The catalytic cracking process can be either fixed bed, moving bed or fluidized bed and the hydrocarbon charge stock flow may be either concurrent or countercurrent to the conventional catalyst flow. The process of this invention is particularly applicable to the fluid catalytic cracking (FCC) process.

Fluidized catalytic cracking is especially benefited by the use of the zeolites, preferably ZSM-5, of the present invention. When used in an FCC operation, the zeolites are preferably in a matrix as hereinbefore described such as silica-alumina, silica-magnesia, silica-zirconia, silica-thoria, silica-beryllia, silica-titania, as well as ternary compositions such as silica-alumina-thoria, silica-alumina-zirconia, silica-alumina-magnesia and silica-magnesia-zirconia. The matrix can be in the form of a cogel. A mixture of clay in combination with silica or any of the above specified cogels to form a matrix is highly preferred.

The treated zeolites of the present invention may beneficially be mixed with conventional cracking catalysts. Conventional cracking catalysts contain active components which may be zeolitic or non-zeolitic. The non-zeolitic active components are generally amorphous silica-alumina and crystalline silica-alumina. However, the major conventional cracking catalysts presently in use generally comprise a crystalline zeolite (active component) in a suitable matrix. Representative crystalline zeolite active component constituents of conventional cracking catalysts include zeolite A (U.S. Patent 2,882,243), zeolite X (U.S. Patent 2,882,244), zeolite Y (U.S. Patent 3,130,007), zeolite ZK-5 (U.S. Patent 3,247,195), zeolite ZK-4 (U.S. Patent 3,314,752), synthetic mordenite and dealuminized synthetic mordenite, merely to name a few, as well as naturally occurring zeolites, including chabazite, faujasite, mordenite, and the like. Preferred crystalline zeolites include the synthetic faujasite zeolites X and Y, with particular preference being accorded zeolite Y.

In general, the treated crystalline zeolites are ordinarily ion exchanged either separately or in the final catalyst with a desired cation to replace alkali metal present in the zeolite as found naturally or as synthetically prepared. The exchange treatment is such as to reduce the alkali metal content of the final catalyst to less than about 1.5 weight percent and preferably less than about 0.5 weight percent. The purpose of ion exchange is to substantially remove alkali metal cations which are known to be deleterious to cracking, as well as to introduce particularly desired catalytic activity by means of the various cations used in the exchange medium. For the cracking operation described herein, preferred cations are hydrogen, ammonium, rare earth and mixtures thereof, with particular preference being accorded rare earth. Ion exchange is suitably accomplished by conventional contact of the zeolite with a suitable salt solution of the desired cation such as, for example, the sulfate, chloride or nitrate.

The above compositions may be readily processed so as to provide fluid cracking catalysts by spray drying the composite to form microspheroidal particles of suitable size. Alternatively, the composition may be adjusted to suitable concentration and temperature to form bead type catalyst particles suitable for use in moving bed type cracking systems. The catalysts may also be used in various other forms such as those obtained by tabletting, balling or extruding.

Hydrocarbon charge stocks undergoing cracking in accordance with this invention comprise hydrocarbons generally and, in particular, petroluem fractions having an initial boiling point of at least 200°C, a 50% point range of at least 260°C and an end point of at least 320°C. Such hydrocarbon fractions include gas oils, residual oils, cycle stocks, whole top crudes and heavy hydrocarbon fractions derived by the destructive hydrogenation of coal, tar, pitches, asphalts and the like. As will be recognized, the distillation of higher boiling petroleum fractions above about 400°C must be carried out under vacuum in order to avoid thermal cracking. The boiling temperatures utilized herein are expressed in terms of convenience of the boiling point corrected to atmospheric pressure.

The catalyst may be steamed prior to use, for instance, in a thermofor catalytic cracking (TCC) unit. Steaming is usually not necessary when the catalyst is to be used in an FCC unit.

Examples

Example 1—Zeolite starting material

The basic zeolite starting material used for subsequent testing was prepared as follows:

A 250 g sample of small-size (0.02 to 0.03 micron) ZSM-5 ($SiO_2/Al_2O_3 \approx 40$) was sized to 8—10 mesh (238—1.68 mm) and calined in a tube furnace in an ammonia stream to 600°C and held at this temperature for one hour. The material was then cooled to room temperature in an ammonia stream. The product was exchanged three times with a solution being 0.1N in $NH_4Cl$ and 0.1N and $NH_4OH$, using 50 cc/g, at room temperature with occasional stirring for two hours each. The material was then filtered, washed chloride-free and dried at ambient temperature.

This material, after the above ion exchange treatment was subjected to conventional calcination, three hours at 538°C. It contained 4.5 wt.% $Al_2O_3$ and had an n-hexane cracking activity of alpha=267. After steaming two hours at 593°C with 100% atmospheric steam, alpha was 25.

Alpha test discussion

An examination of the dispersion in alpha values was conducted to assess the precision of the alpha test. A series of tests was conducted over a several month period with catalyst having alpha activities around 50, 100, and 200.

Based upon about 100 tests, the relative standard deviation was on the order of 15 percent, based on an average of all tests.

Example 2—EDTA extraction

The benefits of the proposed acid treatment are described in Example 2. Here the ammonium form of Example 1 was treated with EDTA, reducing the $Al_2O_3$ content from 4.5 wt% to 3 wt% with unexpected increase in alpha activity both after calcining and after steaming.

The ammonium form of ZSM-5 prepared in Example 1, 10 g, was reslurried with 200 g of water. Ethylenediaminetetraacetic acid, 2.5 g, was added. The mixture was sealed in a teflon jar and heated in a pressurized steam box to 150°C for 24 hours. The product was filtered, washed with hot water and dried at ambient temperature. It contained 3.0 wt% $Al_2O_3$ and had an n-hexane cracking activity of alpha=600 after calcining at 538°C for three hours. After steaming for two hours at 539°C with 100% steam at atmospheric pressure, alpha was 56.

Example 3—$H_2SO_4$ extraction

In like manner a similar base material as Example 1 was treated with concentrated $H_2SO_4$ diluted with 100 g $H_2O$. Here again the acid treatment reduced the $Al_2O_3$ content from 4.5 to 3.0 and increased the alpha activity both after calcining and after steaming.

A duplicate preparation of Example 1, 10 g, was slurried with 100 g of water. Concentrated sulfuric acid, 5.0 g, was added with stirring. The reaction mixture was sealed in a teflon jar and heated to 150°C for 24 hours. The product was filtered, washed until free of sulfate, and dried at ambient temperature. It contained 3.0 wt% $Al_2O_3$ and had an n-hexane cracking activity of alpha=561 after calcining at 538°C for three hours. After steaming for two hours at 593°C, alpha was 58.

Example 4—EDTA extraction

This example shows the catalymic improvement resulting from an EDTA treatment which reduced the $Al_2O_3$ to 3.5 wt% while increasing the alpha activity.

A duplicate preparation of Example 1 was treated with 2.5 g. EDTA and 200 g of water for 24 hours at 100°C. The washed and dried product contained 3.5 wt% $Al_2O_3$ and had a n-hexane cracking activity of alpha=769.

Example 5—$H_2SO_4$ extraction

Another small size starting material was treated with concentrated $H_2SO_4$ or source of acid to produce a zeolite with a 3.4 wt% $Al_2O_3$.

A 250 g sample of small-size (about 0.02 to 0.03 microns or perhaps slightly smaller) ZSM-5 ($SiO_2/Al_2O_3 \approx 40$) was sized, calcined and cooled in an ammonia stream as described in Example 1, but not ion-exchanged. Excess ammonia was removed by flushing with nitrogen at room temperature.

A 140 g sample of this material was slurried with 1400 g of water. Concentrated sulfuric acid, 70 g, was added with stirring. The mixture was heated in a teflon jar to 150°C for 24 hours. The product was separated by filtration, washed sulfate-free and dried at room temperature. It contained 3.4 wt% $Al_2O_3$ and had a n-hexane cracking activity of alpha=764. After steaming for two hours at 593°C, alpha was 41.

Examples 6 and 7

Examples 6 and 7 show the catalytic advantages for an acid EDTA treatment on a large size (1 micron) ZSM-5 with $SiO_2/Al_2O_3$ ratios of about 70/1. Here the acid treatment as shown by Example 7 showed that a slight reduction in alumina from 2.3 wt% (Ex. 6) to 2.2 wt% (Ex. 7) had a significant effect on activity increasing the calcined alpha from 324 to 458 and steamed alpha from 58 to 102. These dramatic changes suggest that not only some aluminum is removed but that some of the aluminum could be redistributed and contribute to the enhanced activity in the larger size ZSM-5.

Example 6—Zeolite starting material

A sample of large-size ZSM-5 (about 1.0 microns) ($SiO_2/Al_2O_3 \approx 70$) was calcined and ion-exchanged in the same manner as described in Example 1. The ammonium form prepared contained 2.3 wt% $Al_2O_3$. After calcining three hours at 538°C, it had a n-hexane cracking activity of alpha=324. After steaming for two hours at 593°C, alpha was 58.

Example 7—EDTA Extraction

In this example, the product of Example 6 is acid-treated. The ammonium form prepared in Example 6, 10 g, was slurried with 100 g of water. Ethylenediaminetetraacetic acid, 1.25 g, was added, and the mixture was heated in a sealed teflon jar to 150°C for 24 hours. The product was filtered and washed with hot water. The product contained 2.2 wt% $Al_2O_3$. After calining for three hours at 538°C, the n-hexane cracking activity was alpha=458. After steaming for two hours at 593°C, alpha was 102.

Example 8—EDTA Extraction

This example illustrates the effect of an acid treatment on a higher $SiO_2/Al_2O_3$ 70/1 starting maerial. Here the charges in alpha activity both calcined and steamed after the EDTA treatment were not as pronounced as with the 40/1 $SiO_2/Al_2O_3$ used in Examples 1—5.

The ammonium form of small-size ZSM-5 of $SiO_2/Al_2O_3$=70 was treated with EDTA at 300°F (149°C)

|  | NH$_4$ ZSM-5 $SiO_2/Al_2O_3$=70 | NH$_4$ ZSM-5 EDTA treated |
| --- | --- | --- |
| $Al_2O_3$, wt% | 2.6 | 2.1 |
| Alpha, calcined | 380 | 391 |
| Alpha, steamed 2 hrs @ 593°C | ·22 | 26 |

Examples 9 and 10

The following examples demonstrate the effect of acid treatment on ZSM-12. Examples 9 and 10 show that the activity of a ZSM-12 zeolite can also be enhanced by aluminum extraction.

Example 9—Zeolite starting material

A sample of ZSM-12 (about 1 µ size crystals), crystallized in the presence of methyltriethylammonium ions and having a $SiO_2/Al_2O_3$ of $\approx 120$ was sized 14—25 mesh, calcined and ammonium ion-exchanged in the same manner as described in Example 1. After washing and drying at ambient temperature, the product contained 1.3% alumina, based on ignited weight, and 0.01% residual sodium. The n-hexane cracking activity of the material calcined for 3 hours at 538°C in air was 82. After steaming for two hours at 593°C with 100% steam of atmospheric pressure, alpha was 33.

Example 10—$H_2SO_4$ extraction

The same starting material as in Example 9 was calcined in a nitrogen stream for 2 hours at 600°C. After this time the nitrogen was replaced by air, and the calcination was continued for two more hours.

Fifty grams of the calcined material was slurried with 300 g of water. Then 15 g of conc. sulfuric acid was added. The slurry was sealed in a Teflon bottle and heated in a pressure steam box at 300°F (149°C) for 24 hours. The solid was then washed with hot water until free of sulfate and dried at ambient temperature. The alumina content was reduced to 1.15%, based on ignited weight, corresponding to a $SiO_2/Al_2O_3$ of 142. The material, calcined at 538°C for three hours, had an alpha-activity of 144. After steaming for 2 hours at 593°C, the alpha was 42.

The significance of these examples is that the cracking activity, or acid activity of the catalyst as measured by the alpha number, increases although aluminum has been removed from the zeolite.

When starting with a relatively low silica/alumina ZSM-5, the ZSM-5 used in Examples 1—5, with a 40:1 silica to alumina mole ratio, the acid extraction technqiues of the present invention improve the alpha activity both before and after steaming as compared to no aluminum removal.

7

## EP 0 142 313 B1

These experimental results are not unique to ZSM-5, other shape selective zeolites, such as those in Examples 8—10, showed similar results.

Extraction of aluminum from ZSM-12 whether by strong acid, or use of chelating agent, significantly increased the alpha activity of the catalyst after conventional steaming treatment.

### Claims

1. A process for treating an aluminosilicate zeolite in order to enhance its catalytic acid activity, said process comprising contacting a zeolite other than zeolite beta having a silica to alumina mole ratio greater than 12 and a constraint index of 1 to 12 with an aluminum extracting reagent at a temperature of from 50°C to 300°C, at a pressure sufficient to maintain said aluminum extracting reagent in the liquid phase, and for a time and under conditions sufficient to increase the acid activity of said zeolite.

2. A process according to Claim 1 wherein at least 5 percent of the aluminum initially present in the zeolite is extracted from the zeolite.

3. A process according to Claim 1 or Claim 2 wherein from 10 percent to 90 percent of the aluminum initially present in the zeolite is extracted from the zeolite and wherein at least a portion of the aluminum so extracted is from the framework structure of the zeolite.

4. A process according to any of Claims 1 to 3 wherein said aluminum extracting reagent is selected from strong mineral acids and chelating agents.

5. A process according to Claim 4 wherein said aluminum extracting reagent is sulfuric acid or ethylenediaminetetraacetic acid.

6. A process according to any of Claims 1 to 5 wherein the temperature at which zeolite is contacted with aluminum extracting reagent is from 90°C to 250°C.

7. A process according to any of Claims 1 to 6 wherein said zeolite is, prior to contact with aluminum extracting reagent, in the hydrogen form.

8. A process according to any of Claims 1 to 6 wherein said zeolite is, prior to contact with aluminum extracting reagent, in the ammonium form.

9. A process according to any of Claims 1 to 8 wherein said zeolite is ZSM-5 or ZSM-12.

### Patentansprüche

1. Verfahren zur Behandlung eines Aluminosilicatzeoliths, um seine katalytische Säureaktivität zu erhöhen, wobei bei diesem Verfahren ein vom Zeolith Beta verschiedener Zeolith mit einem Siliciumdioxid/Aluminiumoxid-Molverhältnis von größer als 12 und einem Zwangsindex von 1 bis 12 bei einer Temperatur von 50°C bis 300°C, einem aureichenden Druck, um das Aluminiumextraktionsmittel in der flüssigen Phase zu halten, und während eines Zeitraumes und bei Bedingungen mit einem Aluminiumextraktionsmittel in Kontakt gebracht wird, die ausreichend sind, um die Saureaktivität dieses Zeolith zu erhöhen.

2. Verfahren nach Anspruch 1, worin zumindest 5% des ursprünglich im Zeolith vorhandenen Aluminiums aus diesem Zeolith extrahiert werden.

3. Verfahren nach Anspruch 1 oder 2, worin von 10 bis 90% des ursprünglich im Zeolith vorhandenen Aluminiums aus dem Zeolith extrahiert werden und worin zumindest ein Teil des so extrahierten Aluminiums aus der Gitterstruktur des Zeoliths stammt.

4. Verfahren nach einem der Ansprüche 1 bis 3, worin das Aluminiumextraktionsmittel aus starken Mineralsäuren und Gelatbildnern ausgewählt ist.

5. Verfahren nach Anspruch 4, worin das Aluminiumextraktionsmittel Schwefelsäure oder Ethylendiamintetraessigsäure ist.

6. Verfahren nach einem der Ansprüche 1 bis 5, worin die Temperatur, bei der der Zeolith mit dem Aluminiumextraktionsmittel in Kontakt gebracht wird, von 90°C bis 250°C beträgt.

7. Verfahren nach einem der Ansprüche 1 bis 6, worin der Zeolith vor dem Kontakt mit dem Aluminiumextraktionsmittel in der Wasserstofform vorliegt.

8. Verfahren nach einem der Ansprüche 1 bis 6, worin der Zeolith vor dem Kontakt mit dem Aluminiumextraktionsmittel in der Ammoniumform vorliegt.

9. Verfahren nach einem der Ansprüche 1 bis 8, worin der Zeolith ZSM-5 oder ZSM-12 ist.

### Revendications

1. Un procédé de traitement d'une zéolite à base d'aluminosilicate en vue d'augmenter son activité acide catalytique, ce procédé consistant à mettre une zéolite autre qu'une zéolite béta, présentant un rapport molaire silice/alumine supérieur à 12 et un indice de contrainte compris entre 1 et 12, au contact d'un réactif d'extraction d'aluminium à une température comprise entre 50 et 300°C, à une pression suffisante pour maintenir cet agent d'extraction d'aluminium en phase liquide et pendant un temps et dans des conditions suffisantes pour augmenter l'activité acide de cette zéolite.

2. Un procédé selon la revendication 1, dans lequel au moins 5% de l'aluminium initialement présent dans la zéolite sont extraits de la zéolite.

8

3. Un procédé selon la revendication 1 ou 2, dans lequel de 10 à 90% de l'aluminium initial présent dans la zéolite sont extraits de la zéolite et dans lequel au moins une portion de l'aluminium ainsi extrait est extraite de la structure de l'édifice cristallin de la zéolite.

4. Un procédé selon l'une quelconque des revendications 1 à 3, dans lequel ce réactif d'extraction d'aluminium est choisi parmi des acides minéraux forts et des agents chelatant.

5. Un procédé selon la revendication 4, dans lequel le réactif d'extraction d'aluminium est l'acide sulfurique ou l'acide éthylènediaminetétra-acétique.

6. Un procédé selon l'une quelconque des revendications 1 à 5, dans lequel la température à laquelle on met la zéolite au contact du réactif d'extraction de l'aluminium est comprise entre 90 et 250°C.

7. Un procédé selon l'une quelconque des revendications 1 à 6, dans lequel cette zéolite, avant son contact avec l'agent d'extraction de l'aluminium, se trouve sous sa forme protonée.

8. Un procédé selon l'une quelconque des revendications 1 à 6, dans lequel cette zéolite, avant son contact avec l'agent d'extraction de l'aluminium, se trouve sous sa forme ammoniée.

9. Un procédé selon l'une quelconque des revendications 1 à 8, dans lequel cette zéolite est la ZSM-5 ou la ZSM-12.